# EUROPÄISCHE PATENTANMELDUNG

(11) **EP 1 238 858 A2**
(43) Veröffentlichungstag der Anmeldung: **11.09.2002**
(21) Anmeldenummer: 02090101.3
(22) Anmeldetag: 08.03.2002
(51) Int. Cl.: B60R 1/074

(54) **Antrieb für den Rückspiegel eines Kraftfahrzeuges**

(30) Priorität: 08.03.2001 DE 10112359
(71) Anmelder: Magna Auteca AG, 8160 Weiz (AT)
(72) Erfinder: Schillegger, Peter, 8302 Nestelbach (AT); Schadler, Bernhard, 8261 Sinabelkirchen (AT)
(74) Vertreter: Pfenning, Meinig & Partner GbR

(57) **Zusammenfassung**

Es wird ein Antrieb für den Rückspiegel eines Kraftfahrzeuges mit einer Antriebskrone, die über eine drehmomentbegrenzende Kupplung mit dem Spiegelfuß des Rückspiegels verbunden ist, mit einer Motoreinheit, die fest mit dem Spiegelkopf verbunden ist und einer Getriebeanordnung vorgeschlagen. Weiterhin ist eine Positionserfassungsvorrichtung zum Bestimmen mindestens einer vorgegebenen Stellung zwischen Antriebskrone und Motoreinheit vorgesehen, wobei die Positionserfassungsvorrichtung mindestens einen am Umfang der Antriebskrone vorgesehenen Vorsprung und mindestens einen ortsfest mit der Motoreinheit verbundenen Anschlaglappen aufweist. Der Anschlaglappen fährt am Umfang der Antriebskrone bei Bewegung der Motoreinheit in Bezug auf die Antriebskrone entlang und tritt in der einen Bewegungsrichtung mit dem Vorsprung in Eingriff, während er in der anderen Bewegungsrichtung federnd über den Vorsprung rutscht.

## Beschreibung

Die Erfindung betrifft einen Antrieb für den Rückspiegel eines Kraftfahrzeuges, durch den der Rückspiegel zwischen unterschiedlichen Stellungen, z.B. der Fahrstellung und der Parkstellung, bei dem der Rückspiegel zum Fahrzeug hin geklappt ist, bewegt werden kann.

Derartige Antriebe sind bekannt und sie weisen beispielsweise eine Motoreinheit, die mit dem Spiegelkopf eines Rückspiegels verbunden ist, und eine Antriebskrone, die über eine drehmomentbegrenzende Kupplung mit den fest mit dem Fahrzeug verbundenen Spiegelfuß verbunden ist, und eine Getriebeanordnung auf. Weiterhin ist üblicherweise eine Positionserfassungsvorrichtung vorgesehen, mit der beispielsweise die Fahrposition und/oder die Parkposition erfaßt werden kann. Es sind Positionserfassungsvorrichtungen bekannt, die beispielsweise aus einem mechanischen Anschlag und einem gefederten Bolzen besteht. Der federnde Bolzen tritt in der Fahrposition des Rückspiegels mit dem mechanischen Anschlag in Eingriff und in gleicher Weise kann ein weiterer mechanischer Anschlag vorgesehen sein, der die Parkposition vorgibt. Die Motoreinheit, die von einer entsprechenden Steuerung in Betrieb gesetzt wird, fährt beispielsweise von der Parkposition in die Fahrposition, wobei der Spiegelkopf mit bewegt wird und wenn der gefederte Bolzen mit dem mechanischen Anschlag in Eingriff tritt, erhöht sich der Motorstrom, wodurch die Steuerung die Fahrposition erkennt und den Motor abschaltet.

Wenn der Rückspiegels beispielsweise manuell in eine überstreckte Position oder auch in eine eingeklappte Position gebracht wird, wird über die drehmomentbegrenzende Kupplung die Mitnahme zwischen Antriebskrone und Spiegelfuß gelöst. Für das elektrische Zurückfahren in eine definierte Stellung, z.B. der Fahrstellung, wird über den Motor die Motoreinheit bis zu einem vorgegebenen Anschlag bewegt und wenn die Motoreinheit am Anschlag festsitzt, dreht sich die Antriebskrone so lange, bis sie wieder über die Kupplung im Spiegelfuß verrastet. Dann wird der Motorstrom umgepolt und der Motor fährt die Motoreinheit mit Spiegelkopf bis zu der durch den Anschlag vorgegebenen Fahrposition.

Es hat sich gezeigt, daß im Stand der Technik die Anschlagsanordnung insbesondere durch den gefederten Bolzen relativ aufwendig ist.

Der Erfindung liegt daher die Aufgabe zugrunde, einen Antrieb für einen Rückspiegel mit einer Positionserfassungsvorrichtung zu schaffen, die einfach im Aufbau und sicher in der Funktionsweise ist.

Diese Aufgabe wird erfindungsgemäße durch die Merkmale des Anspruchs 1 gelöst.

Dadurch, daß die Anschlagsanordnung durch einen auf dem Umfang der Antriebskrone vorgesehene Vorsprung und das Gegenelement als mit der Motoreinheit verbundener federnder Anschlaglappen ausgebildet ist, sind keine beweglichen Elemente notwendig und aufgrund der Ausbildung des Anschlaglappens ist es möglich, daß in der einen Bewegungsrichtung der Motoreinheit der Anschlaglappen mit dem Vorsprung auf dem Umfang, d.h. tangential in Eingriff tritt, während in der anderen Bewegungsrichtung sich der federnde Anschlaglappen federnd in axialer Richtung abbiegt, wenn der Anschlaglappen über den Vorsprung hinweggleitet. Auf diese Weise wird ein Anschlagsanordnung zur Verfügung gestellt, die sehr einfach in ihrer Konstruktion ist und die Sicherheit beibehält.

Durch die in den Unteransprüchen angegebenen Maßnahmen sind vorteilhafte Weiterbildungen und Verbesserungen möglich.

Besonders vorteilhaft ist, wenn der federnde Anschlaglappen an einem Ring angeformt ist, der mit der Motoreinheit beispielsweise durch formschlüssigen Eingriff verbunden ist, wobei in vorteilhafter Weise auch mehrere Anschlaglappen an dem Ring angeformt sein können.

Ein anderes bevorzugtes Ausführungsbeispiel liegt darin, daß im Bereich des mindestens einen Vorsprunges auf dem Umfang der Antriebskrone eine Ausnehmung vorgesehen ist, derart, daß an dem Anschlaglappen angeformter Ansatz die Antriebskrone untergreift, wenn sich der Anschlaglappen im Eingriff mit dem oder in der Nähe des Vorsprunges der Antriebskrone befindet, derart, daß eine Transportsicherung gebildet wird. Die Antriebskrone kann dann während des Transportes nicht von dem Gehäuse der Motoreinheit abfallen, denn beim Transport des Antriebes liegt die Antriebskrone noch nicht auf dem Spiegelfuß auf.

Ausführungsbeispiele der Erfindung sind in der Zeichnung dargestellt und werden in der nachfolgenden Beschreibung näher erläutert. Es zeigen:
- Fig. 1: eine Seitenansicht auf den erfindungsgemäßen Antrieb,
- Fig. 2: eine Unteransicht auf die Antriebskrone vom Spiegelfuß her gesehen,
- Fig. 3: eine Seitenansicht auf die Antriebskrone mit Anschlagring,
- Fign. 4 bis 7: Unteransichten auf den erfindungsgemäßen Antrieb vom Spiegelfuß her gesehen in unterschiedlichen Positionen und
- Fig. 8: eine Unteransicht auf das Gehäuseoberteil mit Teilen der Getriebeanordnung des Antriebes.

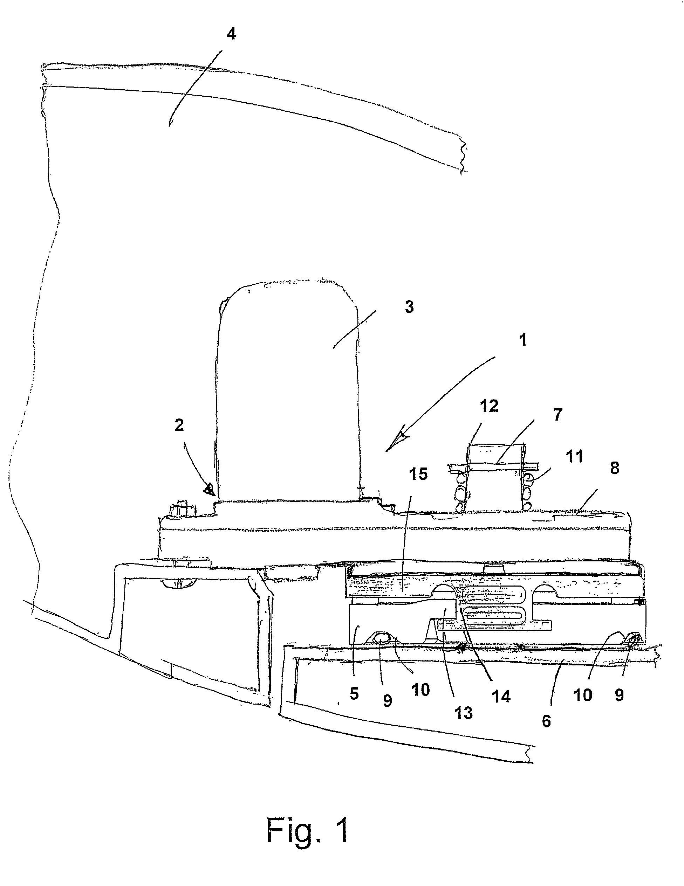

In Fig. 1 ist der erfindungsgemäße Antrieb 1 in der Seitenansicht dargestellt. Er besteht im Wesentlichen aus einer Motoreinheit 2, die einen Elektromotor 3 aufweist und die fest mit einem Spiegelkopf 4 verbunden ist. Weiterhin weist der Antrieb 1 eine Antriebskrone 5 auf, die über eine drehmomentbegrenzende Kupplung mit dem Spiegelfuß 6 verbunden ist, der wiederum fest an einem Kraftfahrzeug befestigt ist. Im dargestellten Ausführungsbeispiel ist der Spiegelfuß 6 mit einem Drehzapfen 7 versehen, der von der Antriebskrone 5, von dem Gehäuse 8 der Motoreinheit sowie von drehenden Elementen einer in dem Gehäuse 8 zumindest teilweise aufgenommenen Getriebeanordnung umgriffen wird.

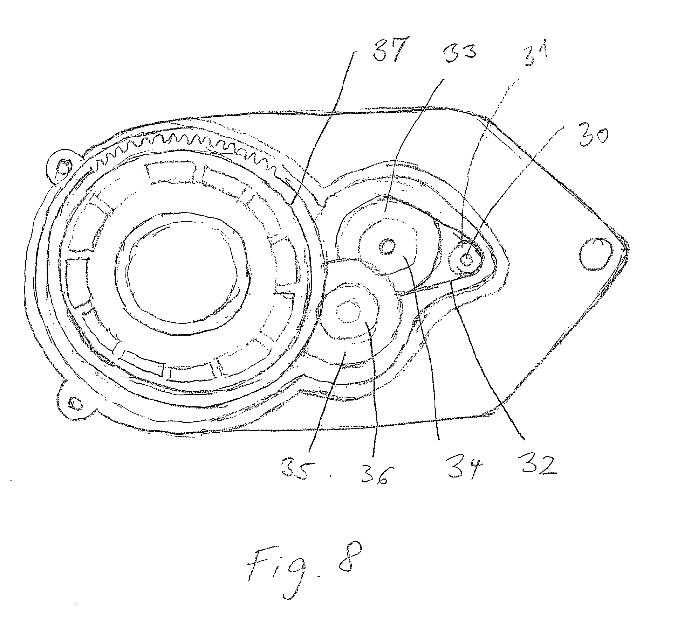

In Figur 8 ist das obere Teil des Gehäuses 8, von unten gesehen, mit einem wesentlichen Teil der Getriebeanordnung dargestellt, die als mit der Drehachse des Drehzapfens 7 konzentrisches Spannungswellengetriebe ausgebildet ist. Die Antriebsachse 30 des Motors 3 ist mit einer Riemenscheibe 31 verbunden, die über einen Zahnriemen 32 eine erste Stirnradstufe bestehend aus einem ersten Großrad 33 mit einstückig angeformtem ersten Ritzel 34 antreibt. Das erste Ritzel 34 treibt eine zweite mit einem zweiten Großrad 35 und einem zweiten angeformten Ritzel 36 ausgebildete Stirnradstufe an. Das zweite Ritzel 36 steht mit der Außenverzahnung eines weiteren Übertragungsgliedes 37 in Verbindung, das als Antriebsexzenter ausgebildet ist und das mit einem elastischen Zahnring und Abtriebsgliedern zusammenwirkt. Für den genaueren Aufbau des Spannungswellengetriebes wird auf die DE 10 112 359 A1 Bezug genommen, deren Offenbarung Bestandteil dieser Anmeldung sein soll.

Die oben beschriebene Einbringung des Zahnriemens 32 in die erste Übersetzungsstufe 31, 33 bringt den Vorteil mit sich, daß der Geräuschpegel im Gegensatz zu der Übersetzung nur mittels Zahnräder um 10 dB gesenkt werden kann.

Die drehmomentbegrenzende Kupplung, durch die die Antriebskrone 5 begrenzt kraftschlüssig mit dem Spiegelfuß 6 verbunden ist, weist im dargestellten Ausführungsbeispiel Kugeln 9 auf, die in Vertiefungen 10 in der Antriebskrone 5 aufgenommen sind, wobei der für die Drehmomentübertragung über diese Kugeln 9 erforderliche Anpreßdruck von einer Druckfeder 11 auf die in dem Gehäuse 8 vorgesehene Getriebeanordnung ausgeübt wird. Die Druckfeder 11 stützt sich an einem Sprengring 12 oder einer Schulter ab.

Für die Feststellung des Spiegelkopfes 4 relativ zum Spiegelfuß 6 wird über eine nicht dargestellte Steuerung der Motor 3 erregt und auf seiner Abtriebswelle sitzt ein Ritzel, das mit der nicht dargestellten Getriebeanordnung in Eingriff steht. Aufgrund der Getriebeanordnung wird die durch den Motor 3 vorgegebene Drehzahl der Abtriebswelle untersetzt und der Spiegelkopf 4 verstellt sich relativ zum Spiegelfuß 6 bzw. zur Antriebskrone 5, wobei die Antriebskrone 5 über die Kupplung 9, 10 mit dem Spiegelfuß 6 verbunden ist.

Da der Rückspiegel bestimmte Stellungen aufweist, die in Zusammenhang mit dem Antrieb 1 erfaßt und von der Steuerung ausgewertet werden müssen, weist der Antrieb 1 mindestens einen sogenannten elektrischen Anschlag auf, der beispielsweise die Fahrposition des Spiegels wiedergibt. Dieser Anschlag besteht aus mindestens einem Vorsprung 13, der auf dem Umfang der Antriebskrone 5 ausgebildet ist und einem federnden Anschlaglappen 14, der an einem Ring 15 aus Federblech angeformt ist und der in tangentialer Richtung im Wesentlichen starr ist und in axialer Richtung federnd ist.

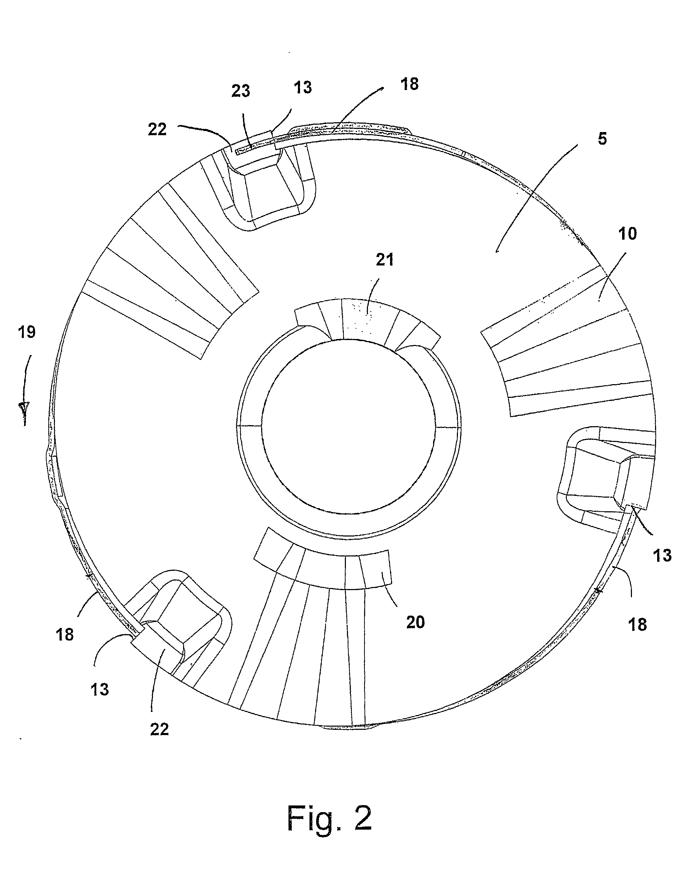

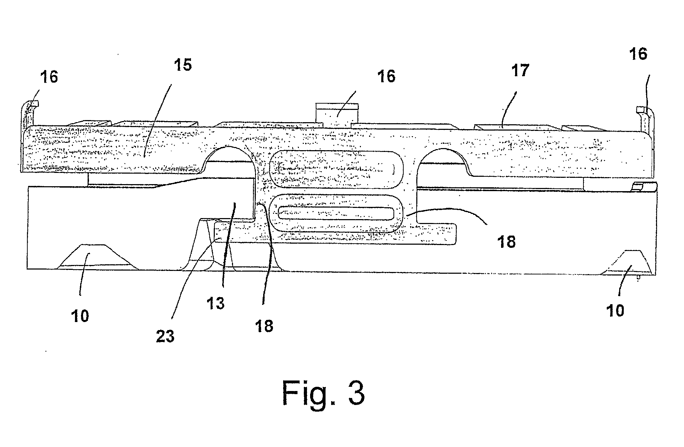

In Fig. 2 und Fig. 3 ist die Antriebskrone 5 und der Federring 15 zur Bildung der Anschlaganordnungen näher dargestellt. Wie aus Fig. 2 zu erkennen ist, die die Antriebskrone 5 von unten zusammen mit dem Anschlagring 15 zeigt, ist der Umfang der Antriebskrone 5 spiralförmig ausgebildet, d.h. er ist als "Dreier"-Spirale ausgebildet, wodurch sich im Ausführungsbeispiel nach Fig. 2 drei Vorsprünge 13 am Umfang der Antriebskrone 5 ergeben. Entsprechend Fig. 1 bis 3 ist der Anschlagring 15 mit an seinem Umfang ausgebildeten Eingriffsvorsprüngen 16 und diametral nach innen gerichteten Umfangslappen 17 versehen, wobei im eingebauten Zustand entsprechend Fig. 1 die Eingriffvorsprünge 16 mit dem Gehäuse 8 in formschlüssigem Eingriff stehen und die Umfangslappen 17 gegen einen ringförmigen Absatz im Gehäuse 8 gedrückt werden. In dem von dem Anschlagring 15 gebildeten Hohlraum, d.h. zwischen der Antriebskrone 5 und dem Gehäuse 8 ist ein ringförmiges Kugellager angeordnet.

In dem in Fig. 3 dargestellten Ausführungsbeispiel ist der Anschlagring als getrenntes Teil dargestellt, das mit dem Gehäuse formschlüssig verbunden ist. In einer anderen Ausführungsform ist der Anschlagring 15 integraler Bestandteil des Gehäuses 8, d.h. er wird bei der Herstellung des Gehäuses von dem Kunststoffmaterial umspritzt.

An dem Ring im Ausführungsbeispiel nach Fig. 2 und Fig. 3 sind nach unten, d.h. zum Spiegelfuß 6 gerichtete Anschlaglappen 18 angeformt, die den Umfang der Antriebskrone 5 zumindest teilweise übergreifen und die bei Drehung der Motoreinheit 2 relativ zur Antriebskrone am Umfang der Antriebskrone 5 entlangfahren und gegebenenfalls mit den Vorsprüngen 13 am Umfang der Antriebskrone 5 in Eingriff treten, wie in Fig. 2 und 3 gezeigt ist. Sollte sich die Motoreinheit 2 und damit der Anschlagring 15 in eine Richtung entgegengesetzt zu der Richtung 19 in Fig. 2 drehen, so würden die federnden Anschlaglappen 18 im Bereich der Vorsprünge elastisch nach außen gedrückt und nach Überfahren der Vorsprünge 13 wieder federnd zurückschnappen.

Wie aus Fig. 2 zu erkennen ist, weist die Antriebskrone 5, die als Sinterkörper ausgebildet ist, die Vertiefungen 10 auf, die Bestandteil der drehmomentbegrenzenden Kupplung sind. Diese Vertiefungen 10 sind als radiale Ausnehmungen ausgebildet, die sich vom Umfang der Antriebskrone 5 in Richtung Mitte erstrecken. Mit diesen Vertiefungen 10 arbeiten die Kugeln 9 zusammen, wobei jedoch anstelle der Kugeln andere Elemente, wie Vorsprünge, die an dem Spiegelfuß 6 vorgesehen sind, verwendet werden können.

Zusätzlich zu den Vertiefungen 10 sind in der Antriebskrone 5 zwei weitere Vertiefungen 20, 21 ausgeformt, wobei diese Vertiefungen 20, 21 auf der Unterseite der Antriebskrone 5 zu den Vertiefungen 10 an unterschiedlichen Stellen, z.B. radial weiter zur Mitte der Antriebskrone hin, angeordnet sind. Diese Vertiefungen 20, 21 sind auch Bestandteile von drehmomentbegrenzenden Kupplungen, wobei die entsprechenden Spiegelfüße andere Modelle von Kraftfahrzeuge betreffen, als diejenigen mit den Vertiefungen 10 zusammenarbeiten. Somit kann der Antrieb auch für unterschiedliche Ausbildungen des Spiegelfußes bzw. des Drehzapfens verwendet werden.

Wie weiter aus Fig. 2 zu erkennen ist, sind an der Unterseite der Antriebskrone 5 weitere Ausnehmungen 22 im Bereich der Vorsprünge 13 angeordnet, die wiederum mit mindestens einem Ansatz 23 am Anschlagring 15 bzw. am Anschlaglappen 18 zusammenarbeiten. Der Ansatz 23 untergreift die Ausnehmung 22, wenn der federnde Anschlaglappen 18 sich im Bereich des Vorsprunges 13 befindet. Dabei bilden die Ausnehmung 22 und der Ansatz 23 eine Transportsicherung für den Antrieb, da die Antriebskrone 5 erst durch den Spiegelfuß 6 befestigt wird und ansonsten beim Transport abfallen könnte. Der Ansatz 23 legt somit die Antriebskrone 5 in Bezug auf das Gehäuse 8 fest. Im dargestellten Ausführungsbeispiel entsprechend Fig. 2 und Fig. 3 ist nur ein Ansatz 23 gezeigt, selbstverständlich kann für jede Ausnehmung 22 ein Ansatz vorgesehen sein. Ebenso wie der Anschlaglappen 18 ist der Ansatz 23 federnd ausgebildet, das bedeutet, daß er über den Vorsprung 13 federnd gleitet, wenn die entsprechenden Drehbewegungen des Anschlagringes 15 relativ zur Antriebskrone 5 auftreten.

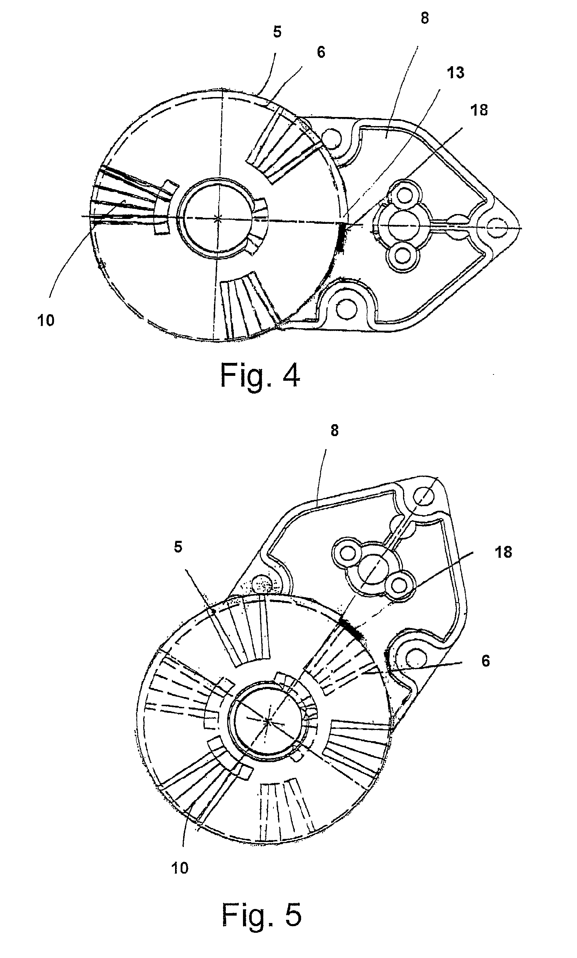

Anhand der Fign. 4 bis 7 soll noch einmal kurz die Funktionsweise des Antriebes 1 erläutert werden, wobei die Figuren die Unteransicht des Antriebs zeigen. In diesen Figuren ist die Transportsicherung nicht eingezeichnet. Außerdem weist dieses Ausführungsbeispiel nur einen Vorsprung 13 mit entsprechendem Anschlaglappen 18 auf.

In Fig. 4 ist die Grundstellung des Antriebes dargestellt, bei der sich der Spiegel in der Fahrposition befindet. Der Spiegelfuß 6 ist hier gestrichelt gezeichnet und es ist zu erkennen, daß der Umfang der Antriebskrone 5 zur Bildung des Vorsprunges 13 spiralartig größer wird. In der Grundstellung stehen Anschlaglappen 18 und Vorsprung 13 im Eingriff und die drehmomentbegrenzende Kupplung hält den Spiegelfuß 6 und die Antriebskrone 5 als eine Einheit zusammen.

In Fig. 5 ist der Spiegel manuell eingeklappt und die drehmomentbegrenzende Kupplung hat sich gelöst, wobei die in diesem Ausführungsbeispiel als Rastelemente auf dem Spiegelfuß ausgebildeten Kupplungselemente gestrichelt dargestellt sind, während die dazugehörigen Vertiefungen 10 an der Antriebskrone 5 in durchgezogenen Linien gezeichnet sind. Der Anschlaglappen 18 ist weiterhin mit dem Vorsprung 13 im Eingriff.

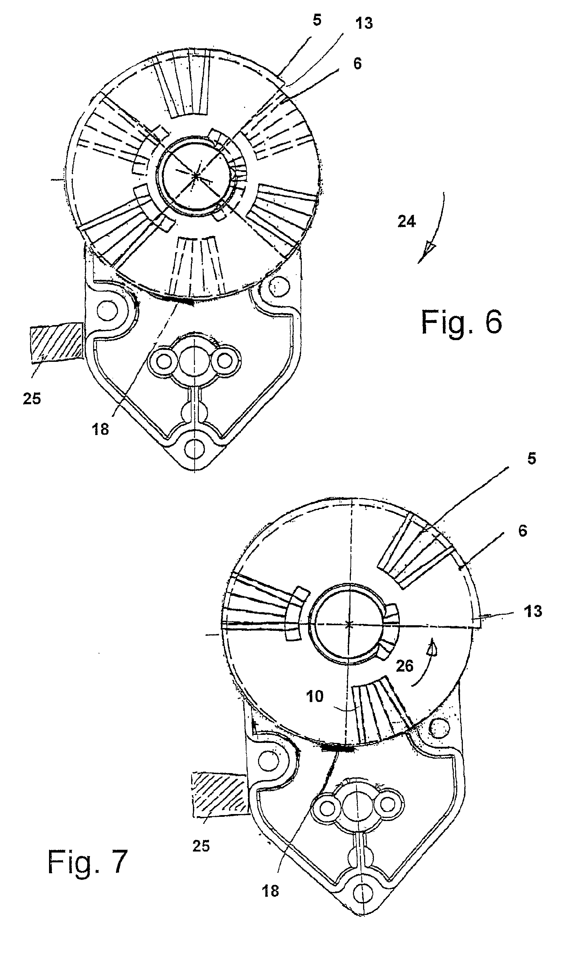

Um den Spiegel bzw. den Antrieb in eine definierte Stellung zu bringen, steuert die Steuerung den Motor der Motoreinheit an und das Gehäuse 8 des Antriebes fährt entsprechend dem Pfeil 24 in Fig. 6 gegen einen mechanischen Anschlag 25, wobei die Antriebskrone 5 im entkuppelten Zustand verbleibt und der Anschlaglappen 18 sich zusammen mit dem Gehäuse 8 von dem Vorsprung 13 auf dem Umfang der Antriebskrone 5 entfernt. Nun dreht sich aufgrund des Widerstandes durch den mechanischen Anschlag 25 die Antriebskrone entsprechend Richtung 26 solange bis sie wieder mit dem Spiegelfuß 6 verrastet, d.h. bis die Kupplungselemente Vertiefungen 10 und Rastvorsprünge in Eingriff treten, was in Fig. 7 dargestellt ist. Nun wird der Motorstrom umgepolt, wodurch die Motoreinheit bzw. das Gehäuse 8 zusammen mit dem Anschlagring bzw. Anschlaglappen 18 in die zur Richtung 24 entgegengesetzte Richtung fährt, solange bis der Anschlaglappen 18 wieder mit dem Vorsprung 13 in Eingriff tritt. Dabei erhöht sich der Motorstrom und die Steuerung schaltet den Motor ab. Der Spiegel befindet sich wieder in der Fahrposition entsprechend Fig. 4.

In den zuvor beschriebenen Ausführungsbeispielen ist der mindestens eine federnde Anschlaglappen an einem Ring angeformt, der mit dem Gehäuse 8 verbunden ist. Es ist jedoch denkbar, daß er in anderer Weise an dem Gehäuse befestigt ist. Weiterhin kann der Anschlaglappen auch schmaler oder breiter als in den Figuren gezeigt sein.

## Patentansprüche

1. Antrieb für den Rückspiegel eines Kraftfahrzeuges, der einen fest mit dem Kraftfahrzeug verbundenen Spiegelfuß und einen dazu schwenkbaren Spiegelkopf aufweist, mit einer Antriebskrone (5), die über eine drehmomentbegrenzende Kupplung mit dem Spiegelfuß (6) verbunden ist, mit einer ein Gehäuse (8) aufweisenden Motoreinheit (2), die fest mit dem Spiegelkopf (4) verbunden ist, mit einer Getriebeanordnung und mit einer Positionserfassungsvorrichtung zum Bestimmen von mindestens einer vorgegebenen Stellung zwischen Antriebskrone (5) und Motoreinheit (2), wobei die Positionserfassungsvorrichtung mindestens einen am Umfang der Antriebskrone (5) vorgesehenen Vorsprung (13) und mindestens einen ortsfest mit der Motoreinheit (2) verbundenen Anschlaglappen (15, 18) aufweist und der Anschlaglappen am Umfang der Antriebskrone (5) bei Bewegung der Motoreinheit (2) zu der Antriebskrone (5) entlangfährt und in der einen Bewegungsrichtung mit dem Vorsprung in Eingriff tritt und in der anderen Bewegungsrichtung federnd über den Vorsprung (13) rutscht.

2. Antrieb nach Anspruch 1, **dadurch gekennzeichnet, daß** der mindestens eine federnde Anschlaglappen (18) an einem Ring (15) angeformt ist.

3. Antrieb nach Anspruch 2, **dadurch gekennzeichnet, daß** der Ring (15) vorzugsweise formschlüssig am Gehäuse (8) der Motoreinheit (2) oder an dem Gehäuse durch Umspritzen festgelegt ist.

4. Antrieb nach einem der Ansprüche 1 bis 3, **dadurch gekennzeichnet, daß** die Antriebskrone (5) mehrere Vorsprünge (13) aufweist.

5. Antrieb nach einem der Ansprüche 1 bis 4, **dadurch gekennzeichnet, daß** die Antriebskrone (5) einen spiral- oder schneckenförmigen Umfang aufweist.

6. Antrieb nach einem der Ansprüche 1 bis 5, **dadurch gekennzeichnet, daß** die Antriebskrone (5) an ihrer dem Spiegelfuß (6) zugewandten Unterseite mindestens eine Vertiefung (10, 20, 21) zur Aufnahme mindestens eines Rastelementes (9) zur Bildung der drehmomentbegrenzenden Kupplung aufweist.

7. Antrieb nach Anspruch 6, **dadurch gekennzeichnet, daß** mehrere Vertiefungen an unterschiedlichen radialen und/oder umfänglichen Stellen zur Anpassung an unterschiedliche Ausbildungen von Spiegelfüßen ausgearbeitet sind.

8. Antrieb nach einem der Ansprüche 1 bis 7, **dadurch gekennzeichnet, daß** die Antriebskrone mindestens eine Ausnehmung oder einen Ausschnitt aufweist und daß an dem Gehäuse (8) der Motoreinheit ein Ansatz vorgesehen ist, der zur Bildung einer Transportsicherung für die Antriebskrone in die Ausnehmung oder den Einschnitt eingreift.

9. Antrieb nach Anspruch 8, **dadurch gekennzeichnet, daß** die Ausnehmung oder der Einschnitt im Bereich des mindestens eines Vorsprunges (10) vorgesehen ist und daß der Ansatz (23) an dem federnden Anschlag (18) angeformt ist.

10. Antrieb nach einem der Ansprüche 1 bis 9, **dadurch gekennzeichnet, daß** der Anschlag aus federndem Metall, wie Federstahl oder aus einem eine federnde Wirkung aufweisenden Kunststoff besteht.

11. Antrieb nach einem der Ansprüche 1 bis 10, **dadurch gekennzeichnet, daß** die Getriebeanordnung als Spannungswellengetriebe ausgebildet ist.

12. Antrieb nach Anspruch 11, **dadurch gekennzeichnet, daß** die Getriebeanordnung zumindest in einer Übersetzungsstufe eine Übertragung mittels Zahnriemens aufweist.
